# EUROPÄISCHE PATENTSCHRIFT

(11) **EP 4 120 040 B1**
(45) Veröffentlichungstag und Bekanntmachung des Hinweises auf die Patenterteilung: **10.09.2025**
(21) Anmeldenummer: 21185038.3
(22) Anmeldetag: 12.07.2021
(51) Int. Cl.: G05D 1/00

(54) **AUTONOMES ODER TEILAUTONOMES STEUERN EINES GESPANNS UMFASSEND EIN ZUGFAHRZEUG UND EINEN NUTZFAHRZEUGANHÄNGER**
AUTONOMOUS OR PARTIALLY AUTONOMOUS CONTROL OF A TRAILER COMPRISING A TOWING VEHICLE AND A COMMERCIAL VEHICLE TRAILER
COMMANDE AUTONOME OU SEMI-AUTONOME D'UN ENSEMBLE ATTELÉ COMPRENANT UN VÉHICULE DE TRACTION ET UNE REMORQUE DE VÉHICULE UTILITAIRE

(43) Veröffentlichungstag der Anmeldung: 18.01.2023
(73) Patentinhaber: Schmitz Cargobull AG, 48341 Altenberge (DE)
(72) Erfinder: Lannoije, Marnix, 48341 Altenberge (DE)
(74) Vertreter: Cohausz & Florack

(56) Entgegenhaltungen:
- DE-U1- 202017 102 364
- US-A1- 2018 364 738
- US-A1- 2019 118 814
- US-A1- 2019 220 034
- US-A1- 2020 276 989

## Beschreibung

### Gebiet

Beispielhafte Ausführungsformen der Erfindung betreffen Lösungen zum autonomen oder teilautonomen Steuern eines Gespanns umfassend ein Zugfahrzeug und einen Nutzfahrzeuganhänger.

### Hintergrund

Im Stand der Technik sind autonome und/oder teilautonome Fahrzeuge bekannt. Diese Fahrzeuge können sich autonom und/oder teilautonom entlang einer vorgegebenen Route bewegen.

Die Patentschrift US 2018/364738 A1 beschreibt einen umkehrbaren, fahrerlosen, vollelektrischen oder Plug-in-Hybrid Sattelzug-Anhänger, umfassend einen Anhänger, der mit autonomer, umkehrbarer Selbstantriebs- und Lenkausrüstung ausgerüstet ist und so konfiguriert ist, dass er in einer Zug- und/oder Schubkonfiguration an ein oder zwei Zugfahrzeugen andocken kann. Das/die Zugfahrzeug(e) sind für die autonome Navigation ausgerüstet. Austauschzugfahrzeuge können autonom von einer Lade- und/oder Tankeinrichtung zum Sattelzug-Anhänger navigieren und darüber hinaus autonom einen Austauschvorgang durchführen, bei dem aufgebrauchte Zugfahrzeuge durch frisch aufgeladene Zugfahrzeuge ersetzt werden. Das/die ausgetauschte(n) Zugfahrzeug(e) navigieren dann autonom zurück zur Lade- und/oder Tankeinrichtung, während der Sattelzug-Anhänger ununterbrochen weiter zu seinem Ziel fährt. Soweit gesetzlich zulässig, können kombinierte Straßenzugfahrzeuge mit mehreren Anhängern gebildet werden, indem Anhänger an Anhänger gekoppelt werden und ggf. ein Zugfahrzeug zwischen Anhängern eingefügt wird, die an beiden Enden des eingefügten Zugfahrzeuges befestigt werden.

### Zusammenfassung einiger beispielhafter Ausführungsformen der Erfindung

Eine Aufgabe der Erfindung ist es die im Stand der Technik bekannten Techniken zum autonomen oder teilautonomen Steuern von Fahrzeugen entlang einer Route auf Gespanne umfassend ein Zugfahrzeug und einen Nutzfahrzeuganhänger zu übertragen.

Gemäß einem Aspekt der Erfindung wird ein Nutzfahrzeuganhänger offenbart, wobei der Nutzfahrzeuganhänger antriebslos ist, wobei der Nutzfahrzeuganhänger umfasst:
- Verbindungsmittel eingerichtet zum Herstellen einer mechanischen und elektrischen Verbindung zwischen dem Nutzfahrzeuganhänger und einem unbemannten Zugfahrzeug;
- mehrere Umgebungssensoren eingerichtet zum Erfassen von Umgebungseigenschaften in der Umgebung des Nutzfahrzeuganhängers, wobei die Umgebungssensoren ferner eingerichtet sind zum Bereitstellen von Umgebungsinformationen, die die durch die Umgebungssensoren in der Umgebung des Nutzfahrzeuganhängers erfassten Umgebungseigenschaften repräsentieren;
- Steuermittel eingerichtet zum teilautonomen oder autonomen Steuern des unbemannten Zugfahrzeugs zumindest teilweise basierend auf den Umgebungsinformationen, wenn die mechanische und elektrische Verbindung zwischen dem Nutzfahrzeuganhänger und dem unbemannten Zugfahrzeug hergestellt ist.

Ein Nutzfahrzeuganhänger ist zum Beispiel ein Anhänger für einen Lastkraftwagen, wie ein Starrdeichselanhänger oder ein Gelenkdeichselanhänger oder ein Sattelauflieger. Solche Nutzfahrzeuganhänger sind insbesondere für den Transport von Gütern, vorzugsweise Stückgütern, im öffentlichen Straßenverkehr vorgesehen. Zu diesem Zweck weisen Nutzfahrzeuganhänger unterschiedliche Arten von Nutzfahrzeugaufbauten auf, welche der Aufnahme der zu transportierenden Güter in einem Laderaum dienen. So sind beispielsweise Kofferaufbauten mit festen Seitenwänden, einer festen Stirnwand, einer durch Flügeltüren gebildeten Rückwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern. Dementsprechend soll unter einem Nutzfahrzeugaufbau beispielsweise ein Kofferaufbau, ein Planenaufbau und/oder ein Curtainsider verstanden werden.

Unter dem Herstellen der mechanischen und elektrischen Verbindung zwischen dem Nutzfahrzeuganhänger und dem unbemannten Zugfahrzeug soll beispielsweise das Herstellen einer mechanischen Verbindung und das Herstellen einer elektrischen Verbindung zwischen dem Nutzfahrzeuganhänger und dem unbemannten Zugfahrzeug verstanden werden. Zu diesem Zweck können die Verbindungsmittel des Nutzfahrzeuganhängers beispielsweise zumindest ein mechanisches Verbindungsmittel und zumindest ein elektrisches Verbindungsmittel(d.h. zumindest zwei Verbindungsmittel, nämlich das mechanische Verbindungsmittel und das elektrische Verbindungsmittel) umfassen; und das unbemannte Zugahrzeug kann hierzu korrespondierende Verbindungsmittel umfassen, wobei die korrespondierenden Verbindungsmittel des unbemannten Zugfahrzeugs zum Beispiel zumindest ein korrespondierendes mechanisches Verbindungsmittel und zumindest ein korrespondierendes elektrisches Verbindungsmittel umfassen.

Zum Beispiel kann ein solches mechanisches Verbindungsmittel des Nutzfahrzeuganhängers eingerichtet sein, eine mechanische Verbindung mit dem korrespondierenden mechanischen Verbindungsmittel des unbemannten Zugfahrzeugs herzustellen, um die mechanische Verbindung zwischen dem Nutzfahrzeuganhänger und dem unbemannten Zugfahrzeug herzustellen. Zum Beispiel sind die zueinander korrespondierenden mechanischen Verbindungsmittel korrespondierende Teile eines Kupplungssystems wie einer Sattelkupplung, einer Bolzenkupplung oder einer Kugelkopfkupplung.

Ferner kann ein solches elektrisches Verbindungsmittel des Nutzfahrzeuganhängers eingerichtet sein, eine elektrische Verbindung mit zumindest einem korrespondierenden elektrischen Verbindungsmittel des unbemannten Zugfahrzeugs herzustellen, um die elektrische Verbindung zwischen dem Nutzfahrzeuganhänger und dem unbemannten Zugfahrzeug herzustellen. Es versteht sich, dass auch vorgesehen sein kann, dass mehrere elektrische Verbindungen (z.B. zumindest eine Energieversorgungsverbindung und/oder zumindest eine Steuerverbindung) zwischen dem Nutzfahrzeuganhänger und dem unbemannten Zugfahrzeug hergestellt werden können. Zu diesem Zweck können mehrere elektrische Verbindungsmittel des Nutzfahrzeuganhängers vorgesehen sein, die jeweils eingerichtet sind, eine jeweilige elektrische Verbindung mit zumindest einem korrespondierenden elektrischen Verbindungsmittel des unbemannten Zugfahrzeugs herzustellen. Alternativ oder zusätzlich kann das zumindest eine elektrische Verbindungsmittel des Nutzfahrzeuganhängers eingerichtet sein, mehrere parallele elektrische Verbindungen mit zumindest einem korrespondierenden elektrischen Verbindungsmittel des unbemannten Zugfahrzeugs herzustellen. Zum Beispiel sind die zueinander korrespondierenden elektrischen Verbindungsmittel korrespondierende Teile eines einpoligen oder mehrpoligen Steckverbindersystems.

Bei dem unbemannten Zugfahrzeug handelt es sich beispielsweise um das unten offenbarte unbemannte Zugfahrzeug.

Wenn die mechanische und elektrische Verbindung zwischen dem Nutzfahrzeuganhänger und dem unbemannten Zugfahrzeug hergestellt ist, bilden das unbemannte Zugfahrzeug und der Nutzfahrzeuganhänger ein Gespann (z.B. einen Lastzug und/oder einen Sattelzug), so dass das unbemannte Zugfahrzeug den Nutzfahrzeuganhänger zieht.

Dass die Steuermittel eingerichtet sind zum teilautonomen oder autonomen Steuern des unbemannten Zugfahrzeugs soll beispielsweise derart verstanden werden, dass die Steuermittel eingerichtet sind, die Bewegung des Zugfahrzeugs teilautonom oder autonom zu steuern. Dabei soll unter einem teilautonomen Steuern beispielsweise verstanden werden, dass die Steuermittel das Zugfahrzeug derart steuern, dass sich das Zugfahrzeug entlang zumindest eines Teils einer vorgegebenen Route selbsttätig (z.B. ohne Einfluss eines Fahrzeugführers) bewegt (z.B. fährt und/oder lenkt); und unter einem autonomen Steuern soll beispielsweise verstanden werden, dass die Steuermittel das Zugfahrzeug derart steuern, dass es sich entlang der gesamten vorgegebenen Route selbsttätig (z.B. ohne Einfluss eines Fahrzeugführers) bewegt (z.B. fährt und/oder lenkt). Zum Beispiel steuern die Steuermittel Antriebsmittel und/oder Lenkmittel des unbemannten Zugfahrzeugs.

Beispielsweise kann vorgesehen sein, dass die Steuermittel das Zugfahrzeug in vorgegebenen Fahrsituationen wie bei geringen Geschwindigkeiten (z.B. Geschwindigkeiten nicht höher als 20 km/h oder 10 km/h oder 7 km/h) und/oder in bekannten Umgebungen (z.B. einem Betriebshof und/oder einem Güter/Containerumschlagplatz) und/oder in wenig komplexen Fahrsituationen (z.B. in einer Fahrzeugkolonne auf der Autobahn) autonom steuert und dass in anderen Fahrsituationen eine Fernsteuerung durch einen Fahrzeugführer an einer entfernten Vorrichtung erfolgt.

Es versteht sich, dass die Steuermittel auf die individuellen Fahreigenschaften des Nutzfahrzeuganhängers angepasst sein können, so dass das Steuern des unbemannten Nutzfahrzeugs die Fahreigenschaften des Nutzfahrzeuganhängers berücksichtigt. Zu diesem Zweck kann beispielsweise auch der durch Beladungssensoren erfasste Beladungszustand des Nutzfahrzeuganhängers berücksichtigt werden.

Die Steuermittel können Hardware- und/oder Software-Komponenten umfassen. Die Steuermittel können beispielsweise mindestens einen Speicher mit Programmanweisungen eines Computerprogramms und mindestens einen Prozessor ausgebildet zum Ausführen von Programmanweisungen aus dem mindestens einen Speicher umfassen. Dementsprechend sollen insbesondere auch Steuermittel als offenbart verstanden werden, die zumindest einen Prozessor und zumindest einen Speicher mit Programmanweisungen umfassen, wobei der zumindest eine Speicher und die Programmanweisungen eingerichtet sind, gemeinsam mit dem zumindest einen Prozessor das unbemannte Zugfahrzeug teilautonom oder autonom zu steuern.

Das Steuern erfolgt zum Beispiel über eine Steuerverbindung, die Teil der elektrischen Verbindung zwischen dem Nutzfahrzeuganhänger und dem unbemannten Zugfahrzeug ist. Da das Steuern erfolgt, wenn die mechanische und elektrische Verbindung zwischen dem Nutzfahrzeuganhänger und dem unbemannten Zugfahrzeug hergestellt ist, zieht das Zugfahrzeug den Nutzfahrzeuganhänger, während es sich entlang der Route bewegt.

Um beispielsweise die Route oder Hindernisse auf der Route erkennen und die Bewegung des Zugfahrzeugs entsprechend steuern zu können, erfolgt das teilautonome oder autonome Steuern zumindest teilweise basierend auf den durch die Umgebungssensoren erfassten Umgebungsinformationen.

Jeder Umgebungssensor der mehreren von dem Nutzfahrzeuganhänger umfassten Umgebungssensoren ist beispielsweise eingerichtet zum Erfassen einer jeweiligen Umgebungseigenschaften in einer jeweiligen Umgebung des Nutzfahrzeuganhängers. Als Ergebnis des Erfassens der jeweiligen Umgebungseigenschaften in der jeweiligen Umgebung des Nutzfahrzeuganhängers durch den jeweiligen Umgebungssensor, stellt der jeweilige Umgebungssensor beispielsweise eine Umgebungsinformation bereit, die die durch den jeweiligen Umgebungssensor in der jeweiligen Umgebung des Nutzfahrzeuganhängers erfasste Umgebungseigenschaften (z.B. qualitativ oder quantitativ) repräsentiert. Das Bereitstellen der Umgebungsinformationen erfolgt beispielsweise über ein Bussystem des Nutzfahrzeuganhängers. Dabei soll unter einer jeweiligen Umgebungseigenschaft zum Beispiel eine in der jeweiligen Umgebung des Nutzfahrzeuganhängers erfassbare physikalische oder chemische Größe und/oder Eigenschaft verstanden werden. Dabei kann die jeweilige Umgebung des Nutzfahrzeuganhängers durch den jeweiligen Erfassungsbereich des jeweiligen Umgebungssensors definiert sein. Es versteht sich, dass die (jeweilige) Umgebung des Nutzfahrzeuganhängers auch eine (jeweilige) Umgebung des unbemannten Zugfahrzeugs ist, wenn die mechanische und elektrische Verbindung zwischen dem Nutzfahrzeuganhänger und dem unbemannten Zugfahrzeug hergestellt ist.

Zum Beispiel sind die Umgebungssensoren eingerichtet, einen Umgebungsbereich vor und/oder neben und/oder hinter den Nutzfahrzeuganhänger zu erfassen, z.B. um für die Route und/oder für Hindernisse charakteristische Umgebungseigenschaften zu erfassen, und entsprechende Umgebungsinformationen bereitzustellen, die es ermöglichen, die Route und/oder Hindernisse zu erkennen, so dass die Steuermittel das Zugfahrzeug derart steuern können, dass es sich entlang der Route und/oder um Hindernisse herum bewegt. Zum Beispiel umfassen die Umgebungssensoren (i) einen oder mehrere Radarsensoren und/oder (ii) einen oder mehrere Bildsensor und/oder (iii) einen oder mehrere Lidarsensoren.

Die Erfindung stellt somit ein Lösung zum autonomen oder teilautonomen Steuern eines Gespanns umfassend das unbemannte Zugfahrzeug und den Nutzfahrzeuganhänger bereit. Dabei ermöglicht die Erfindung das Steuern des unbemannten Zugfahrzeug durch Steuermittel des Nutzfahrzeuganhängers und basierend auf Umgebungsinformationen, die durch Umgebungssensoren des Nutzfahrzeugsensors erfasste Umgebungseigenschaften repräsentieren. Dies ist zum einen vorteilhaft, weil die Umgebungsinformationen dadurch möglichst "nah" an den Umgebungssensoren verarbeitet werden. Denn sie müssen lediglich von den Umgebungssensoren zu den Steuermitteln (z.B. über ein Bussystem) übertragen werden und können somit mit geringer Latenz durch die Steuermittel verarbeitet werden. Zum anderen ist dies vorteilhaft, weil das Steuern die individuellen Fahreigenschaften des Nutzfahrzeuganhängers berücksichtigen kann.

Gemäß einem weiteren Aspekt der Erfindung wird ein System offenbart, wobei das System umfasst:
- einen Nutzfahrzeuganhänger (z.B. den oben offenbarten Nutzfahrzeuganhänger), und
- ein unbemanntes Zugfahrzeug (z.B. das unten offenbarte unbemannte Zugfahrzeug).

Das unbemannte Zugfahrzeug und der Nutzfahrzeuganhänger sind beispielsweise mechanisch und elektrisch miteinander verbunden, so dass sie ein Gespann bilden.

Ferner wird ein unbemanntes Zugfahrzeug offenbart, wobei das unbemannte Zugfahrzeug umfasst:
- Antriebsmittel eingerichtet zum Antreiben eines oder mehrerer Räder des unbemannten Zugfahrzeugs;
- Lenkmittel eingerichtet zum Beeinflussen einer Fahrtrichtung des unbemannten Zugfahrzeugs;
- Verbindungsmittel eingerichtet zum Herstellen einer mechanischen und elektrischen Verbindung zwischen dem Nutzfahrzeuganhänger und dem unbemannten Zugfahrzeug, wobei die Antriebsmittel und/oder die Lenkmittel eingerichtet sind, durch Steuermittel des Nutzfahrzeuganhängers gesteuert zu werden, wenn die mechanische und elektrische Verbindung zwischen dem Nutzfahrzeuganhänger und dem unbemannten Zugfahrzeug hergestellt ist.

Dass das Zugfahrzeug unbemannt ist, soll beispielsweise derart verstanden werden, dass es weder zum Transport für einen Fahrzeugführer noch für einen oder mehrere Passagiere ausgebildet ist. Zum Beispiel ist das unbemannte Zugfahrzeug kabinenlos (d.h. es weist keine Fahrer- und/oder Passagierkabine auf). Dies ist beispielsweise vorteilhaft, um aufgrund der Gewichtseinsparung durch den Entfall der Fahrer- und/oder Passagierkabine eine höhere Nutzlast zu ermöglichen und/oder einen geringeren Energieverbrauch zu erreichen.

Zum Beispiel ist das unbemannte Zugfahrzeug ein zweispuriges Kraftfahrzeug. Dementsprechend können die Antriebsmittel beispielsweise einen oder mehrere Motoren wie einen oder mehrere Benzin-, Diesel- oder Elektromotoren umfassen, der/die zumindest zwei Räder auf der gleichen Achse des unbemannten Zugfahrzeugs antreiben; und die Lenkmittel bilden beispielsweise eine Achsschenkellenkung, mit der zumindest beide Vorderräder des unbemannten Zugfahrzeugs gelenkt werden können. Es versteht sich, dass die Erfindung nicht auf diese beispielhafte Ausführungsform beschränkt ist.

Die Verbindungsmittel sind eingerichtet zum Herstellen einer mechanischen und elektrischen Verbindung zwischen dem Nutzfahrzeuganhänger und dem unbemannten Zugfahrzeug. Bei dem Nutzfahrzeuganhänger handelt es sich beispielsweise um den oben offenbarten Nutzfahrzeuganhänger; und bei den Verbindungsmitteln des unbemannten Zugfahrzeugs handelt es sich beispielsweise um zu den oben offenbarten Verbindungsmitteln des Nutzfahrzeuganhängers korrespondierende Verbindungsmittel. Dementsprechend soll die obige Offenbarung der Verbindungsmittel des Nutzfahrzeugs auch als Offenbarung korrespondierender Verbindungsmittel des unbemannten Zugfahrzeugs verstanden werden.

Die Antriebsmittel und/oder die Lenkmittel sind eingerichtet, durch Steuermittel des Nutzfahrzeuganhängers gesteuert zu werden, wenn die mechanische und elektrische Verbindung zwischen dem Nutzfahrzeuganhänger und dem unbemannten Zugfahrzeug hergestellt ist. Das Steuern korrespondiert beispielsweise zu dem oben offenbarten Steuern durch die Steuermittel des Nutzfahrzeugs und erfolgt beispielsweise über eine Steuerverbindung, die Teil der elektrischen Verbindung zwischen dem Nutzfahrzeuganhänger und dem unbemannten Zugfahrzeug ist.

Weitere Vorteile der offenbarten Erfindung werden nachfolgend anhand beispielhafter Ausführungsformen des offenbarten Nutzfahrzeuganhängers, des offenbarten unbemannten Zugfahrzeugs und des offenbarten Systems beschrieben.

In beispielhaften Ausführungsformen werden die Umgebungsinformationen über ein Bussystem des Nutzfahrzeuganhängers von den Umgebungssensoren an die Steuermittel (z.B. eine Busschnittstelle der Steuermittel) übertragen. Beispiele für ein solches Bussystem sind ein CAN-, K-Leitung-, LIN- oder Flexray-Bussystem sowie Automotive Ethernet. CAN ist in den Standards der ISO 11898-Familie, K-Leitung ist in den Standards ISO 9141 und ISO 14230-1, LIN ist in den Standards der ISO 17987-Familie und Flexray in den Standards der ISO 17458-Familie spezifiziert. Automotive Ethernet ist unter anderem in den Standards IEEE 802.3bw und IEEE 802.3bp spezifiziert.

In beispielhaften Ausführungsformen umfasst der Nutzfahrzeuganhänger ferner:
- Energieversorgungsmittel eingerichtet zum Bereitstellen einer Energieversorgung des unbemannten Zugfahrzeugs über die elektrische Verbindung zwischen dem Nutzfahrzeuganhänger und dem unbemannten Zugfahrzeug; und/oder
- Kommunikationsmittel eingerichtet zum Kommunizieren mit dem unbemannten Zugfahrzeug über die elektrische Verbindung zwischen dem Nutzfahrzeuganhänger und dem unbemannten Zugfahrzeug und/oder zum drahtlosen Kommunizieren mit einer entfernten Vorrichtung.

Die elektrische Verbindung zwischen dem Nutzfahrzeuganhänger und dem unbemannten Zugfahrzeug umfasst beispielsweise eine Energieversorgungsverbindung, über die das unbemannten Zugfahrzeug mit von den Energieversorgungsmitteln bereitgestellter Energie versorgt werden kann. Die Energieversorgungsmittel umfassen beispielsweise einen elektrischen Energiespeicher wie eine Batterie und/oder einen elektrischen Generator wie einen Dieselgenerator. Es versteht sich, dass das unbemannte Zugfahrzeug auch eigene Energieversorgungsmittel umfassen kann.

Unter Kommunizieren soll beispielsweise das Senden und Empfangen von Informationen (z.B. Steuerbefehlen und/oder Fernsteuerungsbefehlen) gemäß einem vorgegebenen Kommunikationsstandard verstanden werden.

Das Kommunizieren mit dem unbemannten Zugfahrzeug über die elektrische Verbindung erfolgt beispielsweise drahtgebundenen. Zum Beispiel umfasst die elektrische Verbindung eine Steuerverbindung, über die diese drahtgebundene Kommunikation erfolgt. Zum Beispiel erfolgt die Kommunikation gemäß einem drahtgebundenen Kommunikationsstandard; und die Steuerverbindung ist beispielsweise eine Kommunikationsverbindung gemäß diesem drahtgebundenen Kommunikationsstandard. Beispiele für einen solchen drahtgebundenen Kommunikationsstandard sind CAN, K-Leitung, LIN oder Flexray. CAN ist in den Standards der ISO 11898-Familie, K-Leitung ist in den Standards ISO 9141 und ISO 14230-1, LIN ist in den Standards der ISO 17987-Familie und Flexray in den Standards der ISO 17458-Familie spezifiziert.

Das Kommunizieren mit der entfernten Vorrichtung erfolgt beispielsweise drahtlos. Zum Beispiel erfolgt die Kommunikation gemäß einem drahtlosen Kommunikationsstandard. Beispiele für einen solchen drahtlosen Kommunikationsstandard sind WLAN, GSM, UMTS und/oder LTE. WLAN ist zum Beispiel in den Standards der IEEE-802.11-Familie spezifiziert. Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich.

Beispiel für solche Kommunikationsmittel ist eine Kommunikationsschnittstelle gemäß einem drahtlosen und/oder drahtgebundenen Kommunikationsstandard.

Die Kommunikationsmittel können zumindest teilweise Teil der Steuermittel sein. Es kann aber auch vorgesehen sein, dass die Kommunikationsmittel zumindest teilweise separat von dem Steuermittel sind.

In beispielhaften Ausführungsformen umfasst das autonome oder teilautonome Steuern des unbemannten Zugfahrzeugs:
- Steuern einer Bewegung des unbemannten Zugfahrzeugs derart, dass sich das Zugfahrzeug selbsttätig bewegt; und/oder
- Senden von Steuerbefehlen an das unbemannten Zugfahrzeug über die elektrische Verbindung zwischen dem Nutzfahrzeuganhänger und dem unbemannten Zugfahrzeug; und/oder
- Empfangen von Fernsteuerungsbefehlen von einer entfernten Vorrichtung, wobei das teilautonome Steuern des unbemannten Zugfahrzeugs zumindest teilweise basierend auf den Fernsteuerungsbefehlen erfolgt.

Unter dem Steuern einer Bewegung des unbemannten Zugfahrzeugs soll beispielsweise verstanden werden, dass Antriebsmittel und/oder Lenkmittel des unbemannten Zugfahrzeugs durch die Steuermittel gesteuert werden. Dabei können die Antriebsmittel und/oder Lenkmittel des unbemannten Zugfahrzeugs durch die Steuermittel derart gesteuert werden, dass sich das unbemannte Zugfahrzeug selbsttätig bewegt, z.B. selbsttätig entlang einer vorgegebenen Route oder zumindest eines Teils der vorgegebenen Route (z.B. ohne Einfluss eines Fahrzeugführers) bewegt (z.B. fährt und/oder lenkt). Eine selbsttätige Bewegung soll beispielsweise bedeuten, dass die Bewegung ohne Einfluss eines Fahrzeugführers erfolgt. Da das Steuern erfolgt, wenn die mechanische und elektrische Verbindung zwischen dem Nutzfahrzeuganhänger und dem unbemannten Zugfahrzeug hergestellt ist, zieht das Zugfahrzeug den Nutzfahrzeuganhänger, während es sich entlang der Route bewegt, so dass sich auch der mit dem unbemannten Zugfahrzeug verbundene Nutzfahrzeuganhänger bewegt.

Die Steuerbefehle werden beispielsweise von den oben offenbarten Kommunikationsmitteln gesendet. Wie oben offenbart, können die Kommunikationsmittel Teil der Steuermittel sein. Alternativ können die Steuermittel das Senden der Steuerbefehle bewirken, z.B. indem sie die Kommunikationsmittel entsprechend ansteuern.

Das Senden der Steuerbefehle kann über die oben offenbarte Steuerverbindung, die Teil der elektrischen Verbindung zwischen dem Nutzfahrzeuganhänger und dem unbemannten Zugfahrzeug ist, an das unbemannte Zugfahrzeug erfolgen. Zum Beispiel sind die Steuerbefehle an die Antriebsmittel oder Lenkmittel des unbemannten Zugfahrzeugs gerichtet und/oder eingerichtet, zu bewirken, dass die Antriebsmittel oder Lenkmittel des unbemannten Zugfahrzeugs das unbemannte Zugfahrzeug bewegen.

Die Fernsteuerungsbefehle werden beispielsweise durch die oben offenbarten Kommunikationsmittel über eine drahtlose Kommunikationsverbindung von der entfernten Vorrichtung empfangen.

Wie oben offenbart, soll unter einem teilautonomen Steuern beispielsweise verstanden werden, dass die Steuermittel das Zugfahrzeug derart steuern, dass sich das Zugfahrzeug entlang zumindest eines Teils einer vorgegebenen Route selbsttätig (z.B. ohne Einfluss eines Fahrzeugführers) bewegt (z.B. fährt und/oder lenkt). Auf den anderen Teilen der vorgegebenen Route erfolgt beispielsweise eine Fernsteuerung des unbemannten Zugfahrzeugs durch einen Fahrzeugführer an der entfernten Vorrichtung. Die Fernsteuerungsbefehle repräsentieren somit beispielsweise die durch den Fahrzeugführer an der entfernten Vorrichtung durchgeführte Fernsteuerung.

Dass das teilautonome Steuern des unbemannten Zugfahrzeugs zumindest teilweise basierend auf den Fernsteuerungsbefehlen erfolgt, soll dementsprechend beispielsweise derart verstanden werden, dass die Kommunikationsmittel und/oder die Steuermittel des Nutzfahrzeuganhängers, die Fernsteuerungsbefehle an das unbemannten Zugfahrzeug weiterleiten (d.h. senden). Das Weiterleiten (d.h. Senden) der Fernsteuerungsbefehle kann über die oben offenbarte Steuerverbindung, die Teil der elektrischen Verbindung zwischen dem Nutzfahrzeuganhänger und dem unbemannten Zugfahrzeug ist, an das unbemannte Zugfahrzeug erfolgen. Zum Beispiel sind die Fernsteuerungsbefehle an die Antriebsmittel oder Lenkmittel des unbemannten Zugfahrzeugs gerichtet und/oder eingerichtet, zu bewirken, dass die Antriebsmittel oder Lenkmittel des unbemannten Zugfahrzeugs das unbemannte Zugfahrzeug bewegen.

In beispielhaften Ausführungsformen umfasst der Nutzfahrzeuganhänger ferner eine Nutzfahrzeugaufbau und einen zumindest teilweise durch Wände des Nutzfahrzeugaufbaus gebildeten Laderaum.

Zum Beispiel sind die Umgebungssensoren zumindest teilweise an den Wänden des Nutzfahrzeugsaufbaus angeordnet. Dabei sollen Umgebungssensoren beispielsweise als an den Wänden des Nutzfahrzeugaufbaus angeordnet verstanden werden, wenn sie in den Wänden integriert oder auf den Wänden befestigt sind.

Die Umgebungssensoren können zumindest teilweise in der oberen Hälfte, insbesondere im oberen Drittel oder im oberen Viertel, der Wände des Nutzfahrzeugaufbaus angeordnet sein. Dabei soll unter (i) der oberen Hälfte oder (ii) dem oberen Drittel oder (iii) dem oberen Viertel der Wände des Nutzfahrzeugaufbaus beispielsweise alle Bereiche verstanden werden, die an ein Dach des Nutzfahrzeuganhängers grenzen und sich in vertikaler Richtung über (i) die Hälfte oder (ii) ein Drittel oder (iii) ein Viertel der Höhe der jeweiligen Wand erstrecken. Eine Anordnung von Umgebungssensoren in diesem Bereich(en) ist beispielsweise vorteilhaft, um einen möglichsten großen Umgebungsbereich mit den Umgebungssensoren erfassen zu können.

Zum Beispiel ist der Nutzfahrzeugaufbau ein Kofferaufbau, ein Planenaufbau oder ein Curtainsider.

In beispielhaften Ausführungsformen umfassen die Umgebungssensoren:
- einen Umgebungssensor eingerichtet zum Erfassen eines Umgebungsbereichs vor dem Nutzfahrzeuganhänger;
- einen Umgebungssensor eingerichtet zum Erfassen eines Umgebungsbereichs neben dem Nutzfahrzeuganhänger; und
- einen Umgebungssensor eingerichtet zum Erfassen eines Umgebungsbereichs hinter dem Nutzfahrzeuganhänger.

Dabei sollen die Richtungsangaben "vor" oder "hinter" oder "neben" beispielsweise in Bewegungsrichtung verstanden werden, so dass ein Umgebungsbereichs vor oder hinter oder neben dem Nutzfahrzeuganhänger ein in Bewegungsrichtung (z.B. wenn der Nutzfahrzeuganhänger durch das unbemannten Zugfahrzeug gezogen wird) vor oder hinter oder neben dem Nutzfahrzeuganhänger liegender Umgebungsbereich ist. Ein vor oder hinter oder neben dem Nutzfahrzeuganhänger liegender Umgebungsbereich liegt vorzugsweise auch vor oder hinter oder neben dem unbemannten Zugfahrzeug (z.B. wenn der Nutzfahrzeuganhänger durch das unbemannten Zugfahrzeug gezogen wird).

Der Umgebungssensor eingerichtet zum Erfassen eines Umgebungsbereichs vor dem Nutzfahrzeuganhänger, ist beispielsweise an einer Stirnwand eines Nutzfahrzeugaufbaus des Nutzfahrzeuganhängers angeordnet; der Umgebungssensor eingerichtet zum Erfassen eines Umgebungsbereichs neben dem Nutzfahrzeuganhänger ist beispielsweise an einer Seitenwand des Nutzfahrzeugaufbaus des Nutzfahrzeuganhängers angeordnet; und der Umgebungssensor eingerichtet zum Erfassen eines Umgebungsbereichs hinter dem Nutzfahrzeuganhänger ist beispielsweise an einer Rückwand des Nutzfahrzeugaufbaus des Nutzfahrzeuganhängers angeordnet. Es versteht sich, dass auch mehrere Umgebungssensoren vorgesehen sein können, die jeweils einen jeweiligen Umgebungsbereich vor oder hinter oder neben dem Nutzfahrzeuganhänger erfassen können.

Diese Ausführungsform ist zum Beispiel vorteilhaft, um die Umgebung des Nutzfahrzeuganhängers (und des unbemannten Fahrzeugs) möglichst vollständig durch Bildsensoren überwachen zu können.

In beispielhaften Ausführungsformen umfassen die Umgebungssensoren (i) einen Radarsensor und/oder (ii) einen Bildsensor und/oder (iii) einen Lidarsensor umfassen.

Die durch einen Radarsensor (Radar = Radio Detection and Ranging), einen Bildsensor oder einen Lidarsensor (Lidar = Light Detection and Ranging) erfassten Umgebungsinformationen können beispielsweise zur Erkennung von Objekten (z.B. andere Fahrzeuge oder Hindernisse) und/oder zur Bestimmung des Abstands der Objekte zum Nutzfahrzeuganhänger verwendet werden. Dabei unterscheiden sich diese Sensoren unter anderem in ihrer Reichweite und ihrer Auflösung/Genauigkeit. Beispiele für Radarsensoren sind Radarsensoren mit Radarsignalen mit einer Chirp-Sequence-Modulation im Frequenzbereich 24 GHz oder 77GHz. Solche Radarsensoren können eine Reichweite von mehr als 100m haben. Beispiele für Bildsensoren sind Mono- oder Stereokameras. Sie haben typischerweise eine Reichweite von weniger als 100m. Lidarsensoren basieren beispielsweise auf Infrarotlasern. Sie haben eine ähnliche Reichweite wie Radarsensoren, aber typischerweise eine höhere Auflösung/Genauigkeit.

Zum Beispiel können an der Stirnwand eines Nutzfahrzeugaufbaus des Nutzfahrzeuganhängers zwei Kameras, die beispielsweise eine Stereokamera bilden, und ein Radar- oder Lidarsensor angeordnet sein. Zum Beispiel sind die Kameras an den oberen Ecken der Stirnwand angeordnet, so dass eine Kamera an der oberen rechten Ecke und die andere Kamerad an der oberen linken Ecke angeordnet ist. Diese Anordnung der Kameras ist vorteilhaft für die Bestimmung des Abstands von Objekten zum Nutzfahrzeuganhänger und für die Erkennung von hohen Hindernissen (z.B. Brücken) basierend auf den durch die Kameras erfassten Umgebungsinformationen (z.B. Stereobildern). Der Radar- oder Lidarsensor ist beispielsweise unten an der Stirnwand angeordnet.

In beispielhaften Ausführungsformen umfasst die elektrische Verbindung zwischen dem Nutzfahrzeuganhänger und dem unbemannten Zugfahrzeug eine Busverbindung, insbesondere eine CAN-, K-Leitungs-, LIN- oder Flexray-Verbindung. Zum Beispiel entspricht die oben offenbarte Steuerverbindung dieser Busverbindung.

In der beanspruchten Ausführungsformen ist der Nutzfahrzeuganhänger antriebslos. Dass der Nutzfahrzeuganhänger antriebslos ist, bedeutet beispielsweise, dass der Nutzfahrzeuganhänger keine Antriebsmittel umfasst und sich daher nicht selber (fort-)bewegen kann.

In beispielhaften Ausführungsformen ist der Nutzfahrzeuganhänger ein Starrdeichselanhänger oder ein Gelenkdeichselanhänger oder ein Sattelauflieger.

Weitere vorteilhafte beispielhafte Ausführungsformen der Aspekte der Erfindung sind der folgenden detaillierten Beschreibung einiger beispielhafter Ausführungsformen der vorliegenden Erfindung, insbesondere in Verbindung mit den Figuren zu entnehmen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung verstanden werden.

Es zeigen:
- Fig. 1a - 1c: schematische Darstellungen einer beispielhaften Ausführungsform eines Nutzfahrzeuganhängers gemäß der Erfindung; und
- Fig. 2: ein Blockdiagramm einer beispielhaften Ausführungsform eines Nutzfahrzeuganhängers gemäß der Erfindung.

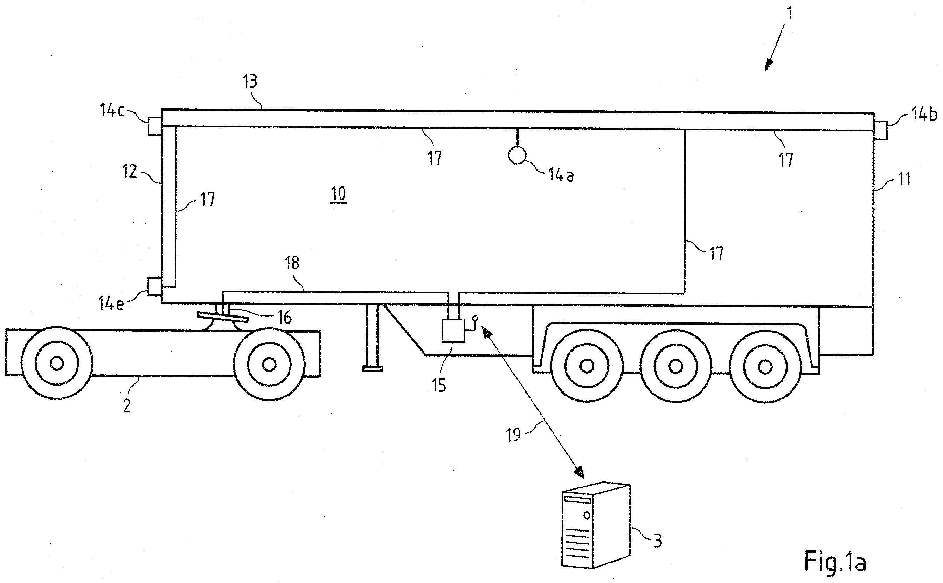

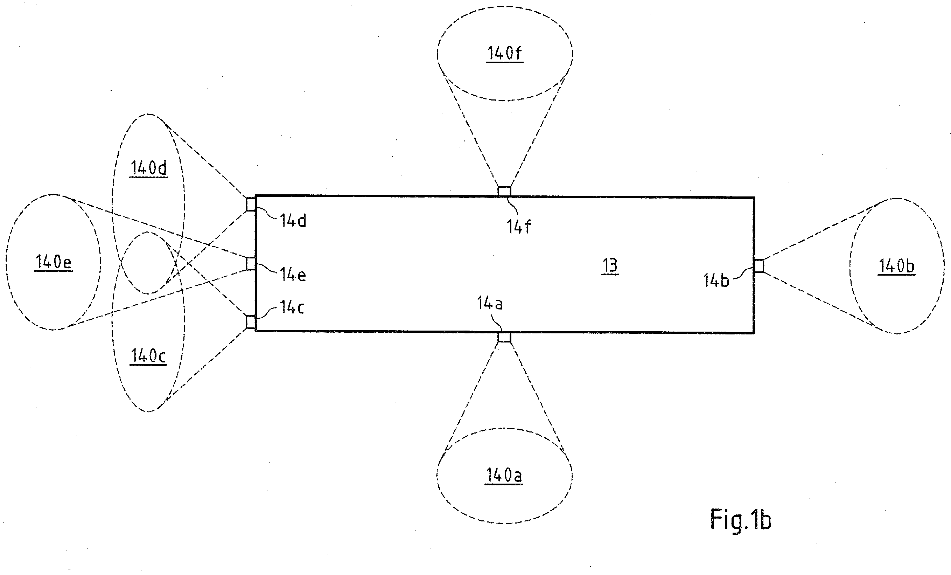

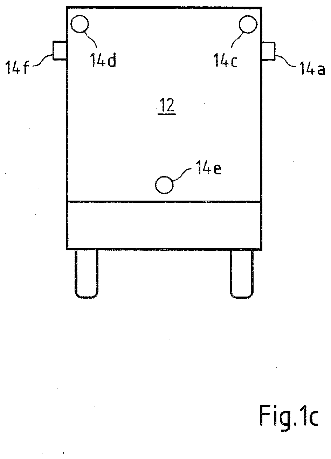

Fig. 1a bis 1c zeigen schematische Darstellungen einer beispielhaften Ausführungsform eines Nutzfahrzeuganhängers 1 gemäß der Erfindung. Fig. 1a ist eine Seitenansicht des Nutzfahrzeuganhängers 1; Fig. 1b ist eine Draufsicht des Nutzfahrzeuganhängers 1; und Fig. 1c ist eine Vorderansicht des Nutzfahrzeuganhängers 1.

Der Nutzfahrzeuganhänger 1 umfasst einen Kofferaufbau mit der Seitenwand 10, der Rückwand 11, der Stirnwand 12 und dem Dach 13. An den Wänden 10, 11 und 12 sind Umgebungssensoren 14a bis 14f angeordnet. Jeder der Umgebungssensoren 14a bis 14f ist beispielsweise eingerichtet zum Erfassen einer jeweiligen Umgebungseigenschaften in einem jeweiligen Umgebungsbereich in einer Umgebung des Nutzfahrzeuganhängers 1. Die durch die Umgebungssensoren erfassten Umgebungsbereiche sind in Fig. 1b mit den Bezugszeichen 140a bis 140 f versehen. Zum Beispiel sind die Umgebungssensoren 14a und 14f jeweils eingerichtet, eine jeweilige Umgebungseigenschaft in einem jeweiligen Umgebungsbereich der Umgebungsbereiche 140a oder 140f neben dem Nutzfahrzeuganhänger 1 zu erfassen; und der Umgebungssensor 14b ist zum Beispiel eingerichtet, eine Umgebungseigenschaft im Umgebungsbereich 140b hinter dem Nutzfahrzeuganhänger 1 zu erfassen; und die Umgebungssensoren 14c bis 14e sind zum Beispiel jeweils eingerichtet, eine jeweilige Umgebungseigenschaft in einem jeweiligen Umgebungsbereich der Umgebungsbereiche 140c, 140d oder 140e vor dem Nutzfahrzeuganhänger 1 zu erfassen. Als Ergebnis des Erfassens der jeweiligen Umgebungseigenschaften in der jeweiligen Umgebung des Nutzfahrzeuganhängers durch den jeweiligen Umgebungssensor der Umgebungssensoren 14a bis 14f, stellt der jeweilige Umgebungssensor beispielsweise eine Umgebungsinformation bereit, die die durch den jeweiligen Umgebungssensor in dem jeweiligen Umgebungsbereich der Umgebungsbereiche 140a bis 140f in der Umgebung des Nutzfahrzeuganhängers 1 erfasste Umgebungseigenschaften (z.B. qualitativ oder quantitativ) repräsentiert.

Die Umgebungssensoren umfassen beispielsweise Radarsensoren und/oder Bildsensoren wie Mono- oder Stereokameras und/oder Lidarsensoren. Zum Beispiel ist der Umgebungssensor 14a, der in der oberen Hälfte der Seitenwand 10 angeordnet ist, ein Bildsensor in Form einer Kamera. Die Umgebungssensoren 14c und 14d, die an den oberen Ecken der Stirnwand 12 angeordnet sind, sind beispielsweise ebenfalls Bildsensoren jeweils in Form einer Kamera. Die Kameras 14c und 14d bilden eine Stereokamera. Ferner kann der Umgebungssensor 14e, der unten an der Stirnwand 12 angeordnet ist, ein Radar- oder Lidarsensor sein.

Außerdem umfasst der Nutzfahrzeuganhänger 1 Steuermittel 15 und Verbindungsmittel 16.

Die Steuermittel 15 sind beispielsweise über ein drahtgebundenes Bussystem 17 mit den Umgebungssensoren 14a bis 14f verbunden. Das Bussystem ist beispielsweise ein CAN-, K-Leitungs-, LIN- oder Flexray-Bussystem oder ein Automotive Ethernet.

Die Verbindungsmittel 16 sind eingerichtet zum Herstellen einer mechanischen und elektrischen Verbindung zwischen dem Nutzfahrzeuganhänger 1 und einem unbemannten Zugfahrzeug 2. Zum Beispiel umfassen der Nutzfahrzeuganhänger 1 und das unbemannten Zugfahrzeug 2 zueinander korrespondierende Verbindungsmittel zum Herstellen einer mechanischen und elektrischen Verbindung zwischen dem Nutzfahrzeuganhänger 1 und dem unbemannten Zugfahrzeug 2. In Fig. 1a sind der Nutzfahrzeuganhänger 1 als Sattelauflieger und das unbemannte Zugfahrzeug 2 als Sattelzugmaschine dargestellt, so dass die zueinander korrespondierenden mechanischen Verbindungsmittel korrespondierende Teile einer Sattelkupplung sein können. Die korrespondierenden elektrischen Verbindungsmittel sind beispielsweise Teile eines ein- oder mehrpoligen Steckverbindersystems.

In Fig. 1a ist die mechanische und elektrische Verbindung zwischen dem Nutzfahrzeuganhänger 1 und dem unbemannten Zugfahrzeug 2 hergestellt, so dass sie ein Gespann in Form eines Sattelzugs bilden und das unbemannte Zugfahrzeug 2 den Nutzfahrzeuganhänger 1 zieht. Die elektrische Verbindung umfasst eine drahtgebundene Steuerverbindung 18, über die die Steuermittel 15 Steuerbefehle an das unbemannte Zugfahrzeug 2 senden und das unbemannte Zugfahrzeug 2 steuern können. Zum Beispiel handelt es sich bei der Steuerverbindung um eine Busverbindung, z.B. eine CAN, K-Leitung, LIN oder Flexray-Verbindung.

Neben dem Nutzfahrzeuganhänger 2 und dem unbemannten Zugfahrzeug 1 ist in Fig. 1a auch eine entfernte Vorrichtung 3 dargestellt. Die Steuermittel 15 können über die drahtlose Kommunikationsverbindung 19 mit der entfernten Vorrichtung 3 kommunizieren und beispielsweise Fernsteuerungsbefehle von der entfernte Vorrichtung 3 empfangen. Dabei soll unter einer drahtlosen Kommunikationsverbindung auch eine Kommunikationsverbindung verstanden werden, die abschnittsweise drahtlos (z.B. in einem drahtlosen Netzwerk) und abschnittsweise drahtgebunden (z.B. im Internet) ist. Die drahtlosen Kommunikationsverbindung 19 ist oder umfasst beispielsweise einen drahtlosen Abschnitt in einem WLAN-, GSM-, UMTS- und/oder LTE-Netzwerk.

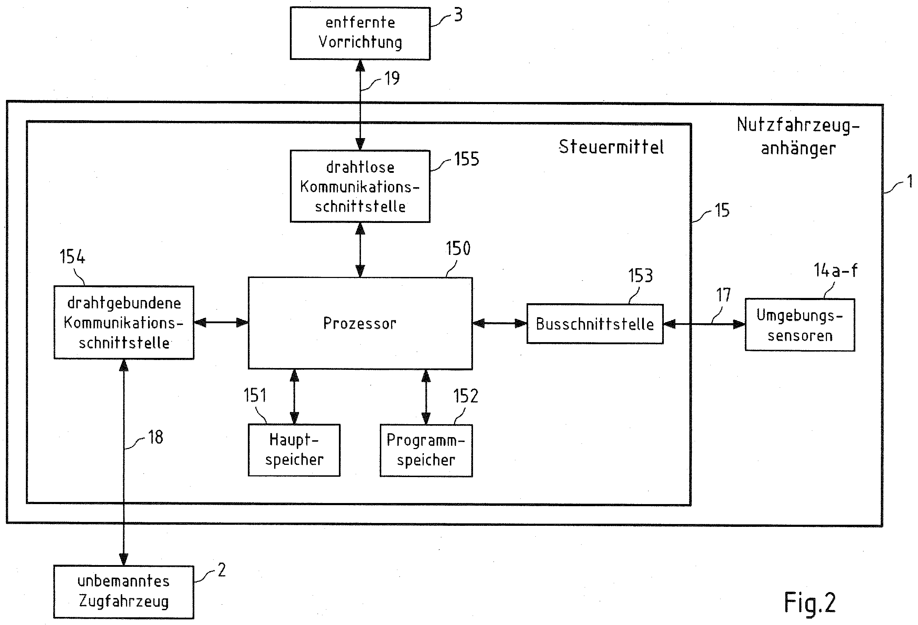

Fig. 2 zeigt ein Blockdiagramm einer beispielhaften Ausführungsform eines Nutzfahrzeuganhängers 1 gemäß der Erfindung. Im Folgenden wird davon ausgegangen, dass der Nutzfahrzeuganhänger 1 gemäß Fig. 2 dem Nutzfahrzeuganhänger 1 gemäß Fig. 1a bis 1c entspricht.

In Fig. 2 sind als Bestandteil des Nutzfahrzeuganhängers 1 Umgebungssensoren 14a bis 14f und Steuermittel 15 dargestellt.

Die Steuermittel 15 sind eingerichtet zum teilautonomen oder autonomen Steuern des unbemannten Zugfahrzeugs 2. Dabei soll unter einem teilautonomen Steuern beispielsweise verstanden werden, dass die Steuermittel 15 das Zugfahrzeug 2 derart steuern, dass sich das Zugfahrzeug 2 entlang zumindest eines Teils einer vorgegebenen Route selbsttätig (z.B. ohne Einfluss eines Fahrzeugführers) bewegt (z.B. fährt und/oder lenkt); und unter einem autonomen Steuern soll beispielsweise verstanden werden, dass die Steuermittel 15 das Zugfahrzeug 2 derart steuern, dass es sich entlang der gesamten vorgegebenen Route selbsttätig (z.B. ohne Einfluss eines Fahrzeugführers) bewegt (z.B. fährt und/oder lenkt).

Beispielsweise kann vorgesehen sein, dass die Steuermittel das Zugfahrzeug in vorgegebenen Fahrsituationen wie bei geringen Geschwindigkeiten (z.B. Geschwindigkeiten nicht höher als 20 km/h oder 10 km/h oder 7 km/h) und/oder in bekannten Umgebungen (z.B. einem Betriebshof und/oder einem Güter/Containerumschlagplatz) und/oder in wenig komplexen Fahrsituationen (z.B. in einer Fahrzeugkolonne auf der Autobahn) autonom steuert und dass in anderen Fahrsituationen eine Fernsteuerung durch einen Fahrzeugführer an der entfernten Vorrichtung 3 erfolgt.

Um beispielsweise die Route oder Hindernisse auf der Route erkennen und die Bewegung des Zugfahrzeugs entsprechend steuern zu können, erfolgt das teilautonome oder autonome Steuern zumindest teilweise basierend auf den durch die Umgebungssensoren 14a bis 14f erfassten Umgebungsinformationen.

Zu diesem Zweck umfassen die Steuermittel 15 einen Prozessor 150 und verbunden mit dem Prozessor 150 einen ersten Speicher als Programm- und Datenspeicher 152, einen zweiten Speicher als Hauptspeicher 151, eine Busschnittstelle 153, eine drahtgebundene Kommunikationsschnittstelle 154 und eine optionale drahtlose Kommunikationsschnittstelle 155.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass Steuermittel 15 auch mehrere Prozessoren 150 umfassen kann.

Prozessor 150 führt Programmanweisungen aus, die in Programmspeicher 152 gespeichert sind, und speichert beispielsweise Zwischenergebnisse oder ähnliches in Hauptspeicher 151. Der Programmspeicher 152 enthält beispielsweise Programmanweisungen eines Computerprogramms, die die Steuermittel 15 veranlassen, das unbemannte Zugfahrzeug zumindest teilweise basierend auf den durch die Umgebungssensoren 14a bis 14f bereitgestellten Umgebungsinformationen autonom oder teilautonom zu steuern, wenn der Prozessor 10 diese in Programmspeicher 11 gespeicherten Programmanweisungen ausführt und wenn die mechanische und elektrische Verbindung zwischen dem Nutzfahrzeuganhänger 1 und dem unbemannten Zugfahrzeug 2 hergestellt ist. Ferner kann das Computerprogramm Programmanweisungen umfassen, die die Steuermittel veranlassen, das unbemannten Zugfahrzeug zumindest teilweise basierend auf von der entfernten Vorrichtung 3 empfangenen Fernsteuerungsbefehlen zu steuern, wenn der Prozessor 10 diese in Programmspeicher 11 gespeicherten Programmanweisungen ausführt und wenn die mechanische und elektrische Verbindung zwischen dem Nutzfahrzeuganhänger 1 und dem unbemannten Zugfahrzeug 2 hergestellt ist. Wie oben offenbart, soll unter einem teilautonomen Steuern beispielsweise verstanden werden, dass die Steuermittel 15 das Zugfahrzeug 2 derart steuern, dass sich das Zugfahrzeug 2 entlang zumindest eines Teils einer vorgegebenen Route selbsttätig (z.B. ohne Einfluss eines Fahrzeugführers) bewegt (z.B. fährt und/oder lenkt). Auf den anderen Teilen der vorgegebenen Route erfolgt beispielsweise eine Fernsteuerung des unbemannten Zugfahrzeugs 2 durch einen Fahrzeugführer an der entfernten Vorrichtung 3. Die Fernsteuerungsbefehle repräsentieren somit beispielsweise die durch den Fahrzeugführer an der entfernten Vorrichtung 3 durchgeführte Fernsteuerung.

Es versteht sich, dass die Programmanweisungen des Computerprogramms beispielsweise an die individuellen Fahreigenschaften des Nutzfahrzeuganhängers 1 angepasst sein können.

Programmspeicher 152 enthält ferner beispielsweise das Betriebssystem der Steuermittel 15, das beim Starten der Steuermittel 15 zumindest teilweise in Hauptspeicher 151 geladen und vom Prozessor 150 ausgeführt wird. Insbesondere wird beim Starten der Steuermittel 15 zumindest ein Teil des Kerns des Betriebssystems in den Hauptspeicher 151 geladen und von Prozessor 150 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Steuermittel 15 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 151 und Programmspeicher 152 können auch als ein Speicher ausgebildet sein. Alternativ können Hauptspeicher 151 und/oder Programmspeicher 152 jeweils durch mehrere Speicher gebildet werden. Ferner können Hauptspeicher 151 und/oder Programmspeicher 152 auch Teil des Prozessors 150 sein.

Prozessor 150 steuert die Busschnittstellen 153, welche beispielsweise als CAN-, K-Leitungs-, LIN- oder Flexray-Schnittstelle ausgebildet ist. Sie ist beispielsweise eingerichtet zur drahtgebundenen Kommunikation mit den Umgebungssensoren 14a bis 14f über die das Bussystem 17 des Nutzfahrzeuganhängers, welches beispielsweise als CAN-, K-Leitungs-, LIN- oder Flexray-Bussystem ausgebildet ist. Zum Beispiel können die Steuermittel 15 durch die Busschnittstelle 153 durch die Umgebungssensoren 14a bis 14f bereitgestellte Umgebungsinformationen empfangen.

Außerdem steuert die Prozessor 150 die drahtgebundene Kommunikationsschnittstelle 154. Sie beispielsweise ebenfalls als CAN-, K-Leitungs-, LIN- oder Flexray-Schnittstelle ausgebildet ist. Die drahtgebundene Kommunikationsschnittstelle 154 ist beispielsweise eingerichtet zur drahtgebundenen Kommunikation mit dem unbemannten Zugfahrzeug 2 über die Steuerverbindung 18, die Teil der elektrischen Verbindung zwischen dem Nutzfahrzeuganhänger 1 und dem unbemannten Zugfahrzeug 2 ist und beispielsweise als CAN-, K-Leitungs-, LIN- oder Flexray-Verbindung ausgebildet ist. Über die drahtgebundene Kommunikationsschnittstelle 154 können die Steuermittel 15 beispielsweise Steuerbefehle an das unbemannte Zugfahrzeug senden.

Ferner steuert Prozessor 150 die optionale drahtlose Kommunikationsschnittstelle 155, welche beispielsweise als WLAN-, GSM-, UMTS- und/oder LTE-Schnittstelle ausgebildet ist. Sie ist beispielsweise eingerichtet zur Kommunikation mit der entfernten Vorrichtung 3. Zum Beispiel können die Steuermittel durch die Kommunikationsschnittstelle 155 Fernsteuerungsbefehle von der entfernten Vorrichtung 3 empfangen.

Die Komponenten 150 bis 155 der Steuermittel 15 sind beispielsweise über einen oder mehrere Bussysteme (z.B. ein oder mehrere serielle und/oder parallele Busverbindungen) kommunikativ und/oder operativ miteinander verbunden.

## Patentansprüche

1. Nutzfahrzeuganhänger (1), wobei der Nutzfahrzeuganhänger (1) antriebslos ist, wobei der Nutzfahrzeuganhänger umfasst:
- Verbindungsmittel (16) eingerichtet zum Herstellen einer mechanischen und elektrischen Verbindung zwischen dem Nutzfahrzeuganhänger (1) und einem unbemannten Zugfahrzeug (2);
- mehrere Umgebungssensoren (14a-14f) eingerichtet zum Erfassen von Umgebungseigenschaften in der Umgebung des Nutzfahrzeuganhängers (1), wobei die Umgebungssensoren (14a-14f) ferner eingerichtet sind zum Bereitstellen von Umgebungsinformationen, die die durch die Umgebungssensoren (14a-14f) in der Umgebung des Nutzfahrzeuganhängers (1) erfassten Umgebungseigenschaften repräsentieren;
- Steuermittel (15) eingerichtet zum teilautonomen oder autonomen Steuern des unbemannten Zugfahrzeugs (2) zumindest teilweise basierend auf den Umgebungsinformationen, wenn die mechanische und elektrische Verbindung zwischen dem Nutzfahrzeuganhänger (1) und dem unbemannten Zugfahrzeug (2) hergestellt ist.

2. Nutzfahrzeuganhänger (1) gemäß Anspruch 1, wobei der Nutzfahrzeuganhänger (1) ferner umfasst:
- Energieversorgungsmittel eingerichtet zum Bereitstellen einer Energieversorgung des unbemannten Zugfahrzeugs über die elektrische Verbindung zwischen dem Nutzfahrzeuganhänger und dem unbemannten Zugfahrzeug; und/oder
- Kommunikationsmittel (153, 154, 155) eingerichtet zum Kommunizieren mit dem unbemannten Zugfahrzeug (2) über die elektrische Verbindung zwischen dem Nutzfahrzeuganhänger (1) und dem unbemannten Zugfahrzeug (2) und/oder zum drahtlosen Kommunizieren mit einer entfernten Vorrichtung (3).

3. Nutzfahrzeuganhänger (1) gemäß einem der Ansprüche 1 bis 2, wobei das autonome oder teilautonome Steuern des unbemannten Zugfahrzeugs (2) umfasst:
- Steuern einer Bewegung des unbemannten Zugfahrzeugs (2) derart, dass sich das Zugfahrzeug (2) selbsttätig bewegt; und/oder
- Senden von Steuerbefehlen an das unbemannten Zugfahrzeug (2) über die elektrische Verbindung zwischen dem Nutzfahrzeuganhänger (1) und dem unbemannten Zugfahrzeug (2); und/oder
- Empfangen von Fernsteuerungsbefehlen von einer entfernten Vorrichtung (3), wobei das teilautonome Steuern des unbemannten Zugfahrzeugs (2) zumindest teilweise basierend auf den Fernsteuerungsbefehlen erfolgt.

4. Nutzfahrzeuganhänger (1) gemäß einem der Ansprüche 1 bis 3, wobei der Nutzfahrzeuganhänger (1) ferner einen Nutzfahrzeugaufbau und einen zumindest teilweise durch Wände (10, 11, 12) des Nutzfahrzeugaufbaus gebildeten Laderaum umfasst, und wobei die Umgebungssensoren (14a-14f) zumindest teilweise an den Wänden (10, 11, 12) des Nutzfahrzeugsaufbaus angeordnet sind.

5. Nutzfahrzeuganhänger (1) gemäß Anspruch 4, wobei die (14a-14f) Umgebungssensoren zumindest teilweise in der oberen Hälfte, insbesondere im oberen Drittel oder im oberen Viertel, der Wände (10, 11, 12) des Nutzfahrzeugaufbaus angeordnet sind.

6. Nutzfahrzeuganhänger (1) gemäß einem der Ansprüche 4 bis 5, wobei der Nutzfahrzeugaufbau ein Kofferaufbau, ein Planenaufbau oder ein Curtainsider ist.

7. Nutzfahrzeuganhänger (1) gemäß einem der Ansprüche 1 bis 6, wobei die Umgebungssensoren umfassen:
- einen Umgebungssensor eingerichtet zum Erfassen eines Umgebungsbereichs (140c, 140d, 140e) vor dem Nutzfahrzeuganhänger;
- einen Umgebungssensor eingerichtet zum Erfassen eines Umgebungsbereichs (140a, 140f) neben dem Nutzfahrzeuganhänger; und
- einen Umgebungssensor eingerichtet zum Erfassen eines Umgebungsbereichs (140b) hinter dem Nutzfahrzeuganhänger.

8. Nutzfahrzeuganhänger (1) gemäß einem der Ansprüche 1 bis 7, wobei die Umgebungssensoren (14a-14f) einen Radarsensor und/oder einen Bildsensor und/oder einen Lidarsensor umfassen.

9. Nutzfahrzeuganhänger (1) gemäß einem der Ansprüche 1 bis 8, wobei die elektrische Verbindung zwischen elektrische Verbindung zwischen dem Nutzfahrzeuganhänger und dem unbemannten Zugfahrzeug eine Busverbindung (18), insbesondere eine CAN-, K-Leitungs-, LIN- oder Flexray-Verbindung, umfasst.

10. Nutzfahrzeuganhänger (1) gemäß einem der Ansprüche 1 bis 9, wobei der Nutzfahrzeuganhänger (1) ein Starrdeichselanhänger oder ein Gelenkdeichselanhänger oder ein Sattelauflieger ist.

11. System umfassend
- einen Nutzfahrzeuganhänger (1) gemäß einem der Ansprüche 1 bis 10, und
- ein unbemanntes Zugfahrzeug (2).

12. System gemäß Anspruch 11, wobei das unbemannte Zugfahrzeug (2) umfasst:
- Antriebsmittel eingerichtet zum Antreiben eines oder mehrerer Räder des unbemannten Zugfahrzeugs;
- Lenkmittel eingerichtet zum Beeinflussen einer Fahrtrichtung des unbemannten Zugfahrzeugs;
- Verbindungsmittel eingerichtet zum Herstellen einer mechanischen und elektrischen Verbindung zwischen dem Nutzfahrzeuganhänger und dem unbemannten Zugfahrzeug, wobei die Antriebsmittel und/oder die Lenkmittel eingerichtet sind, durch Steuermittel des Nutzfahrzeuganhängers gesteuert zu werden, wenn die mechanische und elektrische Verbindung zwischen dem Nutzfahrzeuganhänger und dem unbemannten Zugfahrzeug hergestellt ist.

## Claims

1. Utility vehicle trailer (1), wherein the utility vehicle trailer (1) is propulsion-free, wherein the utility vehicle trailer comprises:
- connecting means (16) configured to establish a mechanical and electrical connection between the utility vehicle trailer (1) and an unmanned towing vehicle (2);
- multiple environment sensors (14a-14f) configured to detect environmental characteristics in the environment of the utility vehicle trailer (1), wherein the environment sensors (14a-14f) are further configured to provide environment information representing the environment characteristics detected by the environment sensors (14a-14f) in the environment of the utility vehicle trailer (1);
- control means (15) configured to control the unmanned towing vehicle (2) semi-autonomously or autonomously at least partly based on the environmental information when the mechanical and electrical connection between the utility vehicle trailer (1) and the unmanned towing vehicle (2) is established.

2. Utility vehicle trailer (1) according to claim 1, wherein the utility vehicle trailer (1) further comprises:
- power supply means configured to provide a power supply of the unmanned towing vehicle via the electrical connection between the utility vehicle trailer and the unmanned towing vehicle; and/or
- communication means (153, 154, 155) configured to communicate with the unmanned towing vehicle (2) via the electrical connection between the utility vehicle trailer (1) and the unmanned towing vehicle (2) and/or to communicate wirelessly with a remote device (3).

3. Utility vehicle trailer (1) according to one of claims 1 to 2, wherein the autonomous or semi-autonomous control of the unmanned towing vehicle (2) comprises:
- controlling a movement of the unmanned towing vehicle (2) in such a way that the towing vehicle (2) moves autonomously; and/or
- sending control commands to the unmanned towing vehicle (2) via the electrical connection between the utility vehicle trailer (1) and the unmanned towing vehicle (2); and/or
- receiving remote control commands from a remote device (3), wherein the semi-autonomous control of the unmanned towing vehicle (2) is performed at least partially based on the remote control commands.

4. Utility vehicle trailer (1) according to one of claims 1 to 3, wherein the utility vehicle trailer (1) further comprises a utility vehicle body and a load compartment formed at least partially by walls (10, 11, 12) of the utility vehicle body, and wherein the environment sensors (14a-14f) are arranged at least partially on the walls (10, 11, 12) of the utility vehicle body.

5. Utility vehicle trailer (1) according to claim 4, wherein the (14a-14f) environment sensors are at least partially arranged in the upper half, in particular in the upper third or in the upper quarter, of the walls (10, 11, 12) of the utility vehicle body.

6. Utility vehicle trailer (1) according to one of claims 4 to 5, wherein the utility vehicle body is a box body, a tarpaulin body or a curtainsider.

7. Utility vehicle trailer (1) according to one of claims 1 to 6, wherein the environment sensors comprise:
- an environment sensor configured to detect an environment area (140c, 140d, 140e) in front of the utility vehicle trailer;
- an environment sensor configured to detect an environment area (140a, 140f) next to the utility vehicle trailer; and
- an environment sensor configured to detect an environment area (140b) behind the utility vehicle trailer.

8. Utility vehicle trailer (1) according to any of claims 1 to 7, wherein the environment sensors (14a-14f) comprise a radar sensor and/or an image sensor and/or a lidar sensor.

9. Utility vehicle trailer (1) according to one of claims 1 to 8, wherein the electrical connection between the utility vehicle trailer and the unmanned towing vehicle comprises a bus connection (18), in particular a CAN, K-line, LIN or Flexray connection.

10. Utility vehicle trailer (1) according to one of claims 1 to 9, wherein the utility vehicle trailer (1) is a rigid drawbar trailer or an articulated drawbar trailer or a semi-trailer.

11. System comprising
- a utility vehicle trailer (1) according to one of claims 1 to 10, and
- an unmanned towing vehicle (2).

12. System according to claim 11, wherein the unmanned towing vehicle (2) comprises:
- drive means arranged to drive one or more wheels of the unmanned towing vehicle;
- steering means arranged to influence a direction of travel of the unmanned towing vehicle;
- connecting means configured for establishing a mechanical and electrical connection between the utility vehicle trailer and the unmanned towing vehicle, wherein the drive means and/or the steering means are configured to be controlled by control means of the utility vehicle trailer when the mechanical and electrical connection between the utility vehicle trailer and the unmanned towing vehicle is established.

## Revendications

1. Remorque de véhicule utilitaire (1), où la remorque de véhicule utilitaire (1) est dépourvue de moyen d'entraînement, où la remorque de véhicule utilitaire comprend :
- des moyens de liaison (16) configurés pour établir une liaison mécanique et électrique entre la remorque de véhicule utilitaire (1) et un véhicule tracteur (2) sans conducteur ;
- plusieurs capteurs d'environnement (14a-14f) configurés pour détecter les caractéristiques de l'environnement dans l'environnement de la remorque de véhicule utilitaire (1), où les capteurs d'environnement (14a-14f) sont en outre configurés pour fournir des informations d'environnement qui représentent les propriétés de l'environnement détectées par les capteurs d'environnement (14a-14f) dans l'environnement de la remorque de véhicule utilitaire (1) ;
- des moyens de commande (15) configurés pour commander de manière semi-autonome ou autonome le véhicule tracteur sans conducteur (2) au moins en partie sur la base des informations d'environnement lorsque la connexion mécanique et électrique entre la remorque de véhicule utilitaire (1) et le véhicule tracteur sans conducteur (2) est établie.

2. Remorque de véhicule utilitaire (1) selon la revendication 1, où la remorque de véhicule utilitaire (1) comprend en outre :
- des moyens d'alimentation en énergie configurés pour fournir une alimentation en énergie du véhicule tracteur sans conducteur via la connexion électrique entre la remorque de véhicule utilitaire et le véhicule tracteur sans conducteur ; et/ou
- des moyens de communication (153, 154, 155) configurés pour communiquer avec le véhicule tracteur sans conducteur (2) via la connexion électrique entre la remorque de véhicule utilitaire (1) et le véhicule tracteur sans conducteur (2) et/ou pour communiquer sans fil avec un dispositif distant (3).

3. Remorque de véhicule utilitaire (1) selon l'une des revendications 1 à 2, où la commande autonome ou semi-autonome du véhicule tracteur sans conducteur (2) comprend :
- commander un mouvement du véhicule tracteur sans conducteur (2) de telle sorte que le véhicule tracteur (2) se déplace de manière autonome ; et/ou
- envoyer des ordres de commande au véhicule tracteur sans conducteur (2) via la connexion électrique entre la remorque de véhicule utilitaire (1) et le véhicule tracteur sans conducteur (2) ; et/ou
- recevoir des ordres de commande à distance provenant d'un dispositif distant (3), où la commande semi-autonome du véhicule tracteur sans conducteur (2) s'effectue au moins en partie sur la base des ordres de commande à distance.

4. Remorque de véhicule utilitaire (1) selon l'une des revendications 1 à 3, où la remorque de véhicule utilitaire (1) comprend en outre une structure de véhicule utilitaire et un espace de chargement formé au moins en partie par des parois (10, 11, 12) de la structure de véhicule utilitaire, et où les capteurs d'environnement (14a-14f) sont disposés au moins en partie sur les parois (10, 11, 12) de la structure du véhicule utilitaire.

5. Remorque de véhicule utilitaire (1) selon la revendication 4, où les capteurs d'environnement (14a-14f) sont disposés au moins en partie dans la moitié supérieure, en particulier dans le tiers supérieur ou dans le quart supérieur, des parois (10, 11, 12) de la structure de véhicule utilitaire.

6. Remorque de véhicule utilitaire (1) selon l'une des revendications 4 à 5, où la structure de véhicule utilitaire est une structure fourgon, une structure bâchée ou une structure à rideaux coulissants.

7. Remorque de véhicule utilitaire (1) selon l'une des revendications 1 à 6, où les capteurs d'environnement comprennent :
- un capteur d'environnement configuré pour détecter une zone d'environnement (140c, 140d, 140e) devant la remorque de véhicule utilitaire ;
- un capteur d'environnement configuré pour détecter une zone d'environnement (140a, 140f) à côté de la remorque de véhicule utilitaire ; et
- un capteur d'environnement configuré pour détecter une zone d'environnement (140b) derrière la remorque de véhicule utilitaire.

8. Remorque de véhicule utilitaire (1) selon l'une des revendications 1 à 7, où les capteurs d'environnement (14a-14f) comprennent un capteur radar et/ou un capteur d'image et/ou un capteur lidar.

9. Remorque de véhicule utilitaire (1) selon l'une des revendications 1 à 8, où la connexion électrique entre la remorque de véhicule utilitaire et le véhicule tracteur sans conducteur comprend une connexion par bus (18), en particulier une connexion CAN, K-Line, LIN ou Flexray.

10. Remorque de véhicule utilitaire (1) selon l'une des revendications 1 à 9, où la remorque de véhicule utilitaire (1) est une remorque à essieu rigide ou une remorque à essieu articulé ou une semi-remorque.

11. Système comprenant
- une remorque de véhicule utilitaire (1) selon l'une des revendications 1 à 10, et
- un véhicule tracteur sans conducteur (2).

12. Système selon la revendication 11, où le véhicule tracteur sans conducteur (2) comprend :
- des moyens d'entraînement configurés pour entraîner une ou plusieurs roues du véhicule tracteur sans conducteur ;
- des moyens de direction configurés pour influencer la direction de déplacement du véhicule tracteur sans conducteur ;
- des moyens de liaison configurés pour établir une liaison mécanique et électrique entre la remorque de véhicule utilitaire et le véhicule tracteur sans conducteur, où les moyens d'entraînement et/ou les moyens de direction sont prévus pour être commandés par des moyens de commande de la remorque de véhicule utilitaire lorsque la liaison mécanique et électrique entre la remorque du véhicule utilitaire et le véhicule tracteur sans conducteur est établie.
